# EUROPEAN PATENT APPLICATION

(11) **EP 2 228 276 A2**
(43) Date of publication of application: **15.09.2010**
(21) Application number: 10153805.6
(22) Date of filing: 17.02.2010
(51) Int. Cl.: B60W 30/06, B62D 15/02

(54) **Parking assist apparatus**

(30) Priority: 11.03.2009 JP 2009058120
(71) Applicant: AISIN SEIKI KABUSHIKI KAISHA, Kariya-shi, Aichi 448-8650 (JP)
(72) Inventor: Kadowaki, Jun, Kariya-shi Aichi 448-8650 (JP); Watanabe, Kazuya, Kariya-shi Aichi 448-8650 (JP)
(74) Representative: TBK-Patent

(57) **Abstract**

A parking assist apparatus includes a target parking position setting portion (17) specifying a target parking position, a trigger establishment determining portion (16) determining whether or not a parking operation is started by a driver for a vehicle (50) based on a shift position of a shift lever and a steering displacement of a steering wheel, a parking path calculating portion (19) starting a calculation of a path from an own vehicle position to the target parking position in a case where the trigger establishment determining portion (16) determines that the parking operation is started by the driver, and an informing portion (21) informing the driver that it is achievable for the vehicle (50) to be guided to the target parking position in a case where the path from the own vehicle position to the target parking position is generated by the parking path calculating portion.

## Description

### TECHNICAL FIELD

This disclosure relates to a parking assist apparatus for assisting a vehicle to be parked.

### BACKGROUND DISCUSSION

A user of a vehicle (i.e., a driver) may usually park the vehicle in a parking space. When the user parks the vehicle outside of his/her own house, the user may be confronted to various types of parking spaces. The act of parking the vehicle may involve a rearward driving, which causes some users to have difficulties while parking. Not only such users but also some other users may have mental fatigue when rearward driving the vehicle compared to a forward driving because the rearward driving requires a safety confirmation of a surrounding of the vehicle. Thus, a technique for assisting the user of the vehicle to smoothly park the vehicle in a desired parking space has been used as disclosed in JP2000-79860A (hereinafter referred to as Reference 1) and JP2005-313710A (hereinafter referred to as Reference 2).

Reference 1 discloses a parking assist apparatus in which an estimated driving path calculated on the basis of a steering angle of a steering wheel provided at a vehicle is displayed on a display monitor. Then, parking division lines in the vicinity of the estimated driving path are detected on the basis of a display position of the estimated driving path on the display monitor. A user of the vehicle is appropriately informed of an assistance of the parking depending on a parking operation.

Reference 2 discloses a parking assist apparatus in which a driving path from a present vehicle position to a target parking position, which serves as a position having a predetermined positional relationship with the present vehicle position, is calculated while the vehicle is moving. In a case where the driving path is calculated, a user of the vehicle is informed by a communication means that the vehicle can be guided to the target parking position.

When the user of the vehicle uses the parking assist apparatus such as described in References 1 and 2, a system actuation switch for starting a system in connection with the parking assist apparatus should be pressed by the user, for example. Afterwards, only when it is achievable by the vehicle to be automatically steered to a target parking frame specified by the system, an assist start switch for starting the parking assistance becomes effective. That is, the user is required to press the assist start switch so as to start the parking assistance. According to References 1 and 2, the multiple switches should be pressed so as to start the control of the system.

According to the parking assist apparatus disclosed in Reference 1, even when the user intends to use the system related to the parking assistance and presses the system actuation switch, the user may not start the parking assist system in a case where the target parking frame is not detected. According to the parking assist apparatus disclosed in Reference 2, because the driving path is calculated before a shift lever is shifted to the reverse range (R), the driving path may not be established from a position where the shift lever is actually shifted to the reverse range. Therefore, even the user expects the start of the parking assistance and waits to be informed that the vehicle can be guided to the target parking position, the vehicle may move away from the target parking position.

In addition, in order to achieve a low-cost apparatus, an electric motor is used by which a change of the steering angle in a case where the vehicle is guided by an automatic steering is permitted only while the vehicle is moving. Thus, the change of the steering angle when the vehicle is guided by the automatic steering should be conducted while the vehicle is moving, which leads to a certain distance from a position where the parking assistance is started to the target parking frame (i.e., the target parking position). That is, a certain space is required in front of the parking space. Further, the parking assistance is not appropriately performed in a case where an obstacle is present in the vicinity of the parking space.

A need thus exists for a parking assist apparatus by which a parking assistance is appropriately performed in a case where a user (i.e., a driver) intends to park a vehicle and a distance to a target parking position from a position where a parking assistance is started is reduced.

### SUMMARY

According to an aspect of this disclosure, a parking assist apparatus includes a target parking position setting portion specifying a target parking position in which a vehicle is parked, a trigger establishment determining portion determining whether or not a parking operation is started by a driver for the vehicle based on a shift position of a shift lever provided at the vehicle and a steering displacement of a steering wheel provided at the vehicle, a parking path calculating portion starting a calculation of a path from an own vehicle position of the vehicle to the target parking position in a case where the trigger establishment determining portion determines that the parking operation is started by the driver, and an informing portion informing the driver that it is achievable for the vehicle to be guided to the target parking position in a case where the path from the own vehicle position to the target parking position is generated by the parking path calculating portion.

According to the aforementioned disclosure, the parking assistance by the parking assist apparatus is achievable as an extension of a normal parking operation. Thus, the driver is not required to operate an operation switch, and the like. In addition, an early stage of the operation related to the parking operation is performed by the driver so as to start the calculation related to the parking assistance. Then, in a case where the path to the target parking position is generated, the driver is informed that it is achievable for the vehicle to be guided to the target parking position by the parking assist apparatus. The driver therefore appropriately starts the parking assistance by the parking assist apparatus. That is, the driver is informed only when the parking assistance is achievable. According to a conventional parking assist apparatus, even when the apparatus is activated for use, the parking assistance may not be achieved depending on a positional relationship between the vehicle and the target parking position, and the like. In addition, according to this disclosure, because the driver is involved in the early stage of the operation related to the parking operation, the steering angle of the steering wheel is changeable (i.e., the steering wheel is turned) while the vehicle is stopped. Accordingly, a distance from the position from which the parking assistance is started up to the target parking position is reduced. Further, according to the conventional parking assist apparatus, a sufficient distance is required from the target parking position so that the parking assist apparatus can perform the parking assistance. According to this disclosure, because the early stage of the operation related to the parking operation is performed by the driver, the vehicle is possibly started for parking from the vicinity of the target parking position.

The trigger establishment determining portion determines that the parking operation is started in a case where the shift lever is in a reverse range and the steering displacement of the steering wheel steered after the vehicle starts a rearward driving reaches a steering threshold value specified beforehand.

Accordingly, it is appropriately detectable whether or not the driver starts the parking operation.

The trigger establishment determining portion determines that the parking operation is started in a case where the shift lever is in a reverse range and the steering displacement of the steering wheel defined by a steering angle of the steering wheel immediately before the shift lever is shifted to the reverse range and a steering angle of the steering wheel immediately after the vehicle starts a rearward driving is greater than a steering threshold value specified beforehand.

Accordingly, even when the driver turns the steering wheel with the vehicle in the stopped position upon parking the vehicle, it is appropriately detectable whether or not the driver starts the parking operation.

The parking assist apparatus further includes an image capturing portion capturing an image of surroundings of the vehicle, wherein the target parking position setting portion starts an image recognition of a feature related to an identification of the target parking position in a captured image of surroundings of the vehicle by the image capturing portion based on the shift position and the steering displacement

Accordingly, the target parking position is automatically specified upon the start of the parking operation by the driver, without an operation of an operation switch, and the like by the driver.

The target parking position setting portion specifies an area where the image recognition of the feature is performed on the captured image in response to an operation of the steering wheel.

Accordingly, even when multiple parking spaces are present around the vehicle, the area is specified on the captured image depending on the operation of the steering wheel, thereby easily performing the image recognition of the feature related to the identification of the target parking position.

The target parking position setting portion changes the target parking position in response to an operation of the steering wheel by the driver after the target parking position is specified.

Accordingly, even after the target parking position has already been specified, a parking space other than the parking space specified as the target parking position is newly specified as the target parking position by means of the operation of the steering wheel by the driver. Thus, in a case where the target parking position once specified is not desirable, the driver operates the steering wheel so that the vehicle is guided to another parking space, thereby newly specifying the target parking position.

### BRIEF DESCRIPTION OF THE DRAWINGS

The foregoing and additional features and characteristics of this disclosure will become more apparent from the following detailed description considered with the reference to the accompanying drawings, wherein:

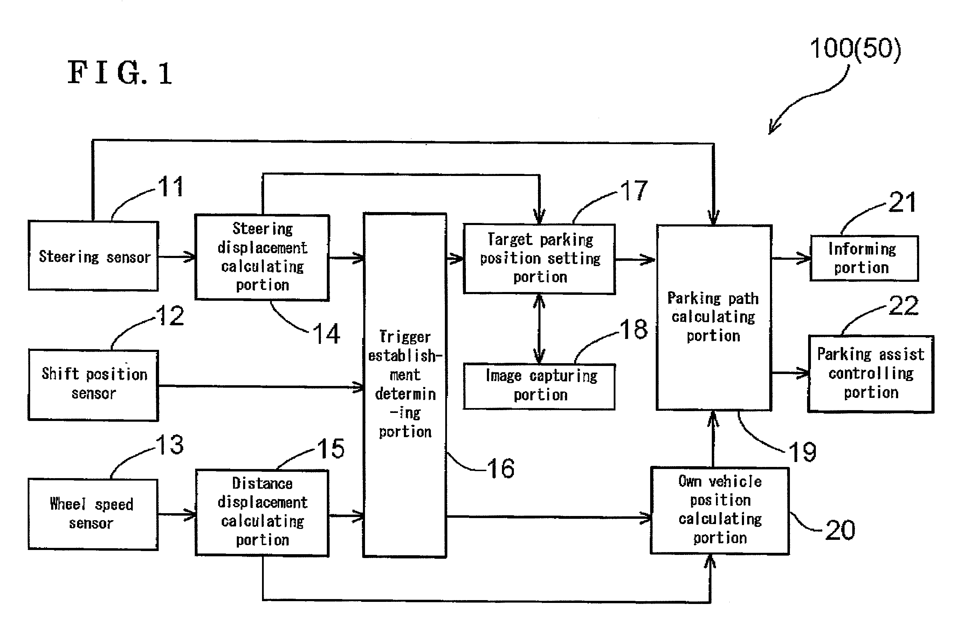

Fig. 1 is a block diagram illustrating a schematic structure of a parking assist apparatus according to an embodiment disclosed here;

Figs. 2A and 2B are diagrams each illustrating an arc model for a driving path according to the embodiment;

Figs. 3A and 3B are diagrams each illustrating a linear model for the driving path according to the embodiment;

Figs. 4A and 4B are diagrams each illustrating a double opposite-arc model for the driving path according to the embodiment;

Figs. 5A, 5B, 5C and 5D are diagrams each illustrating a vehicle state and a captured image according to the embodiment;

Figs. 6A, 6B, 6C and 6D are diagrams each illustrating the vehicle state and the captured image according to the embodiment;

Figs, 7A, 7B, 7C and 7D are diagrams each illustrating the vehicle state and the captured image according to the embodiment;

Figs. 8A, 8B, 8C and 8D are diagrams each illustrating the vehicle state and the captured image according to the embodiment;

Figs. 9A, 9B, 9C and 9D are diagrams each illustrating the vehicle state and the captured image according to the embodiment; and

Figs. 10A and 10B are flowcharts illustrating a process performed by the parking assist apparatus according to the embodiment

### DETAILED DESCRIPTION

An embodiment disclosed here will be explained with reference to the attached drawings. A parking assist apparatus 100 according to the embodiment includes functions for specifying a target parking position during a parking operation performed by a user (i.e., a driver) without an operation of an operation switch by the driver and for calculating a driving path to the target parking position in a case where the driver drives a vehicle 50 rearward to be parked in a predetermined parking space. The parking assist apparatus 100, which is installed in the vehicle 50, includes function portions such as a steering sensor 11, a shift position sensor 12, a wheel speed sensor 13, a steering displacement calculating portion 14, a distance displacement calculating portion 15, a trigger establishment determining portion 16, a target parking position setting portion 17, an image capturing portion 18, a parking path calculating portion 19, an own vehicle position calculating portion 20, an informing portion 21, and a parking assist controlling portion 22. The aforementioned function portions of the parking assist apparatus 100 including a CPU (central processing unit) as a core member and performing various operations for the parking assistance are constituted by hardware, software, or both thereof.

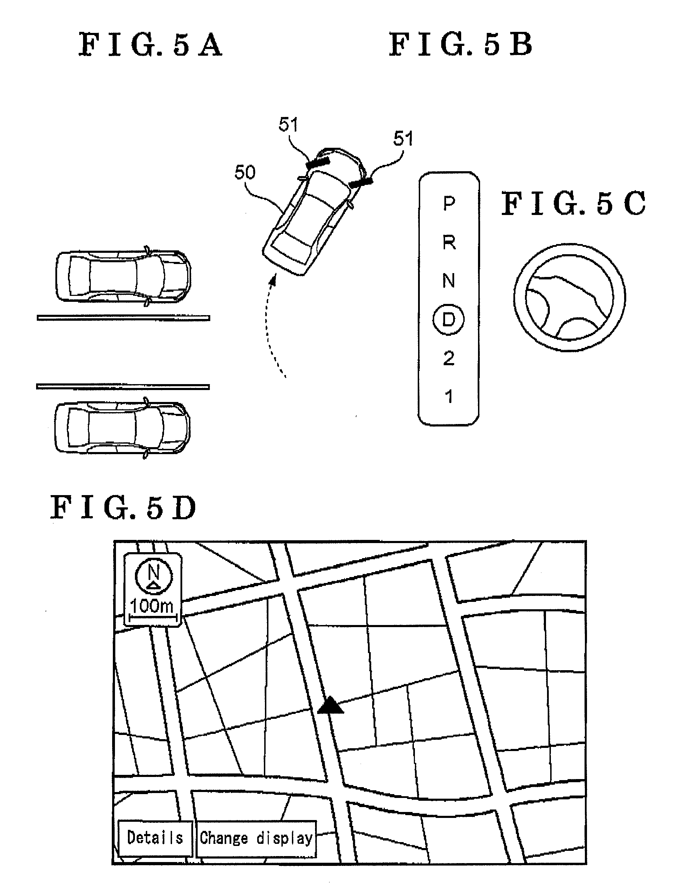

The steering sensor 11 detects a steering angle of a steering wheel provided at the vehicle 50. The steering angle corresponds to a rotational angle of the steering wheel that rotates in a clockwise direction or a counterclockwise direction from a neutral state (i.e., a neutral position). The neutral state of the steering wheel is equal to a state where directions of steered front wheels 51 (see Fig. 5) provided at the vehicle 50 match a longitudinal direction of the vehicle 50. That is, the vehicle 50 moves straight ahead with the steering wheel in the neutral state. The steering sensor 11 that detects the rotational angle of the steering wheel is desirably constituted by a Hall element The Hall element detects a magnetic flux by using a Hall effect. According to the Hall effect, in a case where a magnetic field is vertically applied to a conductor relative to a flowing direction of an electric current in the conductor, an electromotive force is generated in a direction perpendicular to directions of the electric current and the magnetic field.

In a case where the aforementioned Hall element is used, a permanent magnet is arranged around a rotating shaft of the steering wheel. Then, the magnetic field of the permanent magnet that changes depending on a rotation of the steering wheel is appropriately detected by the Hall element. The steering sensor 11 calculates the steering angle of the steering wheel based on a detection result output from the Hall element, which is an electrical signal. The steering angle calculated by the steering sensor 11 is transmitted to the steering displacement calculating portion 14 and the parking path calculating portion 19 as a steering angle information.

The shift position sensor 12 detects a shift position of a shift lever provided at the vehicle 50. According to the present embodiment, the shift lever changes gears formed at an automatic transmission (AT) mechanism. Driving portions of the gears provided at the AT mechanism are fixed within a transmission of the vehicle 50. The AT mechanism includes a parking range (P) mainly used for parking the vehicle, a reverse range (R) for driving the vehicle rearward, a neutral range (N) in which a power transmission from an engine to the driving portions is prohibited, a driving range (D) for normally driving the vehicle, a second range (2) for using an engine brake and in which an upper limit of up-shifting is fixed to the second gear speed, and a first range (1) for using the strong engine brake on a steep downward slope and in which the gear is fixed to the first gear speed. In the AT mechanism, an output voltage is obtained at each of the shift positions corresponding to the aforementioned shift ranges. The shift position sensor 12 detects the present shift position by detecting the output voltage. The detection result of the shift position detected by the shift position sensor 12 is transmitted to the trigger establishment determining portion 16.

The wheel speed sensor 13 detects a rotation speed of a wheel provided at the vehicle 50. The wheel speed sensor 13 detects the rotation speed of the wheel by using the Hall element in the same way as the aforementioned steering sensor 11. Two of the wheel speed sensors 13 are appropriately provided at respective rotating shafts of a left-front wheel and a right-front wheel, for example. Accordingly, because the wheel speed sensors 13 are provided at the rotating shafts of both of the left and right wheels, it is detectable whether the vehicle 50 is moving straight ahead or the vehicle 50 is turning. That is, in a case where the rotation speeds of the left and right wheels are the same, it is determined that the vehicle 50 is moving straight ahead. In a case where the rotation speeds of the left and right wheels are different from each other, it is determined that the vehicle 50 is turning in a direction corresponding to one of the wheels of which the rotation speed is slower than that of the other one of the wheels. The wheel speed sensors 13 are provided at at least either the rotating shafts of the front wheels or the rotating shafts of the rear wheels provided at the vehicle 50. The detection results of the wheel speeds detected by the respective wheel speed sensors 13 are transmitted to the distance displacement calculating portion 15.

The steering displacement calculating portion 14 calculates a steering displacement of the steering wheel. The steering displacement corresponds to a value indicating a difference between a steering angle of the steering wheel at one time and a steering angle of the steering wheel at the other time. The detection results related to the steering angle of the steering wheel are transmitted from the steering sensor 11. The steering displacement calculating portion 14 temporarily stores the steering angle of the steering wheel at one time, which is then compared with the steering angle of the steering wheel at the other time so as to obtain the difference between the two steering angles, The steering displacement calculating portion 14 calculates the steering displacement accordingly. For example, the one time corresponds to a time immediately before the shift lever is shifted to the reverse range for the purpose of parking the vehicle 50 rearward to the target parking position. The other time corresponds to a time when the shift lever is shifted to the reverse range and the vehicle 50 is driven rearward. In such case, the steering displacement calculating portion 14 calculates the displacement of the steering angle of the steering wheel operated between the one time and the other time as the steering displacement. The one time and the other time may be defined differently from the aforementioned manner. The steering displacement calculated by the steering displacement calculating portion 14 is transmitted to the trigger establishment determining portion 16 and the target parking position setting portion 17.

The distance displacement calculating portion 15 calculates a distance displacement of the vehicle 50. The distance displacement corresponds to a value indicating a distance by which the vehicle 50 has moved. The distance is obtained on the basis of the detection results of the wheel speeds transmitted by the respective wheel speed sensors 13. The distance displacement calculating portion 15 calculates a moving distance of each of the wheels based on the detection result of the wheel speed transmitted from each of the wheel speed sensors 13. Thus, the moving distance of the left wheel and the moving distance of the right wheel are calculated. As a result, it is determined whether the vehicle has moved straight ahead or the vehicle has turned by the distance based on the calculation result. The steering displacement calculated by the steering displacement calculating portion 14 is transmitted to the trigger establishment determining portion 16 and the target parking position setting portion 17. The distance displacement calculated by the distance displacement calculating portion 15 is transmitted to the trigger establishment determining portion 16 and the own vehicle position calculating portion 20.

The trigger establishment determining portion 16 determines whether or not the driver starts the parking operation of the vehicle 50 based on the shift position of the shift lever and the steering displacement of the steering wheel. The shift position of the shift lever is identified on the basis of the detection result of the shift position transmitted from the shift position sensor 12. The steering displacement of the steering wheel is transmitted from the steering displacement calculating portion 14. The parking operation corresponds to an operation for parking the vehicle 50. The determination whether the driver starts the parking operation is performed on the basis of the shift position and the steering displacement in a manner shown below.

The trigger establishment determining portion 16 determines that the parking operation is started in a case where the shift lever is positioned in the reverse range and the steering displacement of the steering wheel steered after the start of rearward movement of the vehicle 50 reaches a steering threshold value specified beforehand. The steering threshold value serves as a predetermined determination threshold value specified beforehand. According to the present embodiment, the steering threshold value is specified to be 90 degrees. In such case, the trigger establishment determining portion 16 determines that the parking operation is started when the shift lever is in the reverse range and the steering displacement of the steering wheel steered after the start of the rearward movement of the vehicle 50 turns to 90 degrees. At this time, the determination of the start of the parking operation by the trigger establishment determining portion 16 corresponds to the establishment of a trigger for starting the calculation of the path from the present position of the vehicle 50 to the target parking position. Thus, when the trigger is established, the trigger establishment determining portion 16 transmits the determination result indicating the establishment of the trigger to the target parking position setting portion 17 and the own vehicle position calculating portion 20.

The trigger establishment determining portion 16 may determine whether or not the driver starts the parking operation in a different manner, For example, the trigger establishment determining portion 16 may determine that the parking operation is started when the shift lever is positioned in the reverse range and the steering displacement defined on the basis of the steering angle of the steering wheel immediately before the shift lever is shifted to the reverse range and the steering angle of the steering wheel immediately after the start of the rearward movement of the vehicle 50 is greater than a steering threshold value specified beforehand, for example, 90 degrees. That is, it is determined that the trigger is established for starting the calculation of the path from the present position to the target parking position of the vehicle 50. When the trigger is established, the trigger establishment determining portion 16 transmits the determination result indicating the establishment of the trigger to the target parking position setting portion 17 and the own vehicle position calculating portion 20. The determination of whether or not the steering displacement of the steering wheel is greater than 90 degrees is specifically effective in a case where the driver turns the steering wheel while the vehicle 50 is being stopped at a position where the rearward movement of the vehicle 50 is started.

Further, the driver may start turning the steering wheel while the vehicle is forwardly approaching the position where the rearward movement for parking of the vehicle 50 is started so that the steering angle of the steering wheel is appropriately positioned. Then, the diver may turn the steering wheel after the vehicle 50 is driven rearward, without turning the steering wheel in a state where the vehicle 50 is stopped before being driven rearward. In such case, it is difficult to determine, on the basis of the steering displacement, whether the driver intends to start the parking operation. Thus, the trigger establishment determining portion 16 also determines whether or not the distance displacement is greater than a distance threshold value specified beforehand. According to this determination, it is determinable whether or not the driver intends to start the parking operation based on the rearward movement of the vehicle 50 by a predetermined distance. The distance threshold value is specified beforehand and is defined to be 1m according to the present embodiment. The distance threshold value may be defined to be a different value or be appropriately changeable by the driver.

The image capturing portion 18 captures an image of surroundings of the vehicle 50. The surroundings of the vehicle 50 include at least a rear of the vehicle 50. The image capturing portion 18 is constituted by a CCD (charge coupled device) camera, for example, and in such a case the image capturing portion 18 is a rearview camera. The image capturing portion 18 captures at least an image in the rear of the vehicle 50 and transmits the captured image to the target parking position setting portion 17.

The target parking position setting portion 17 specifies a target parking position where the vehicle 50 is parked. According to the present embodiment, the target parking position setting portion 17 starts an image recognition of a feature related to an identification of the target parking position in the captured image of the surroundings of the vehicle 50 based on the shift position and the steering displacement. The shift position is transmitted from the shift position sensor 12. The steering displacement is transmitted from the steering displacement calculating portion 14. The steering displacement also includes information whether the steering wheel is displaced in the clockwise direction or in the counterclockwise direction. In addition, according to the present embodiment, the captured image of the surroundings of the vehicle 50 corresponds to the captured image of the rear of the vehicle 50, which is transmitted from the image capturing portion 18. The feature related to the identification of the target parking position includes a division line (a white line, and the like), a curb, a pylon, and the like.

In a case where the shit lever is positioned in the R range and the steering displacement includes information that the steering wheel is displaced in the clockwise direction, the driver tends to have an intention to park the vehicle 50 in the parking space positioned at the rear right of the vehicle 50. Thus, the target parking position setting portion 17 starts the image recognition of the feature such as the division line, the curb and the pylon related to the identification of the parking space present at the rear left of the vehicle 50 in a case where the steering displacement includes information that the steering wheel is displaced in the clockwise direction.

On the other hand, in a case where the shift lever is positioned in the R range and the steering displacement includes information that the steering wheel is displaced in the counterclockwise direction, the driver tends to have an intention to park the vehicle 50 in the parking space positioned at the rear left of the vehicle 50. Thus, the target parking position setting portion 17 starts the image recognition of the feature such as the division line, the curb and the pylon related to the identification of the parking space present at the rear right of the vehicle 50 in a case where the steering displacement includes information that the steering wheel is displaced in the counterclockwise direction.

The target parking position setting portion 17 starts the image recognition of the feature related to the identification of the parking space present at the rear right or the rear left of the vehicle 50 in the captured image transmitted from the image capturing portion 18, depending on the shift position and the turning direction of the steering wheel of which information is included in the steering displacement. The image recognition of the feature is performed by a known technique and thus an explanation thereof will be omitted. When the aforementioned feature is detected via the image recognition, the target parking position setting portion 17 specifies the parking space identified by the feature as the target parking position. The target parking position specified by the target parking position setting portion 17 is transmitted to the parking path calculating portion 19.

The own vehicle position calculating portion 20 calculates a present position of the vehicle 50. According to the parking assist apparatus 100 of the present embodiment, the target parking position setting portion 17 specifies the target parking position and the parking path calculating portion 19 calculates the parking path when the trigger for starting the calculation of the path from the present position of the vehicle 50 to the target parking position is established by the trigger establishment determining portion 16. In this case, at a time when the parking path is calculated, the vehicle 50 has possibly moved by some distance by a driving operation of the driver from a position where the trigger is established. In such case, the position of the vehicle 50 when the trigger is established and the position of the vehicle 50 when the parking path is calculated are different from each other. The parking path calculating portion 19 may be prevented from appropriately calculating the parking path accordingly.

Therefore, when the result indicating the establishment of the trigger is transmitted from the trigger establishment determining portion 16, from that point the present position of the vehicle 50 that varies depending on a movement of the vehicle 50 is calculated. The movement of the vehicle 50 is identified on the basis of the distance displacement transmitted by the distance displacement calculating portion 15. The own vehicle position calculating portion 20 calculates the present position (i.e., an own vehicle position) of the vehicle 50 that varies depending on the movement thereof by using the distance displacement. The own vehicle position information indicating the own vehicle position of the vehicle 50 calculated by the own vehicle position calculating portion 20 is transmitted to the parking path calculating portion 19.

The parking path calculating portion 19 starts calculating the path from the own vehicle position of the vehicle 50 to the target parking position when the trigger establishment determining portion 16 determines that the parking operation is started. The own vehicle position information of the vehicle 50 includes the present position of the vehicle 50 when the trigger is established. In a case where the vehicle 50 is stopped upon the establishment of the trigger, the position of the vehicle 50 at that time is the present position. The own vehicle position of the vehicle 50 is identified by the own vehicle position information transmitted by the own vehicle position calculating portion 20. The target parking position is specified by the target parking position setting portion 17. Thus, the parking path calculating portion 19 starts calculating the path from the own vehicle position included in the own vehicle position information transmitted by the own vehicle position calculating portion 20 to the target parking position specified by the target parking position setting portion 17 in a case where the trigger establishment determining portion 16 determines that the parking operation is started.

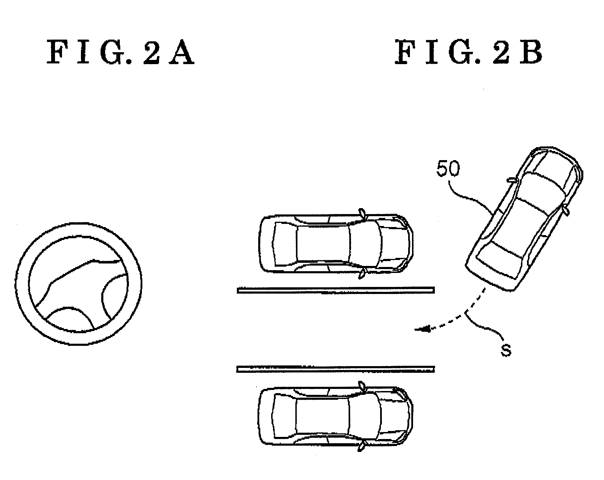

The calculation of the path from the own vehicle position to the target parking position is performed by using the captured image of the surroundings of the vehicle 50. The parking path calculating portion 19 calculates the distance from the own vehicle position to the target parking position by using the captured image. Then, one of an arc model, a linear model, and a double opposite-arc model is applied to the distance from the own vehicle position to the target parking position. According to the arc model as illustrated in Fig. 2A, the vehicle 50 is parked at the target parking position while the steering angle of the steering wheel is maintained from the present position (i.e., the steering wheel is in the turning state). For example, Fig. 2A illustrates a state where the steering wheel is turned in the counterclockwise direction from the neutral state thereof so that the vehicle 50 is driven rearward. Thus, a driving locus s forming an arc shape in the clockwise direction as illustrated by a dashed line in Fig. 2B is obtained for parking the vehicle 50.

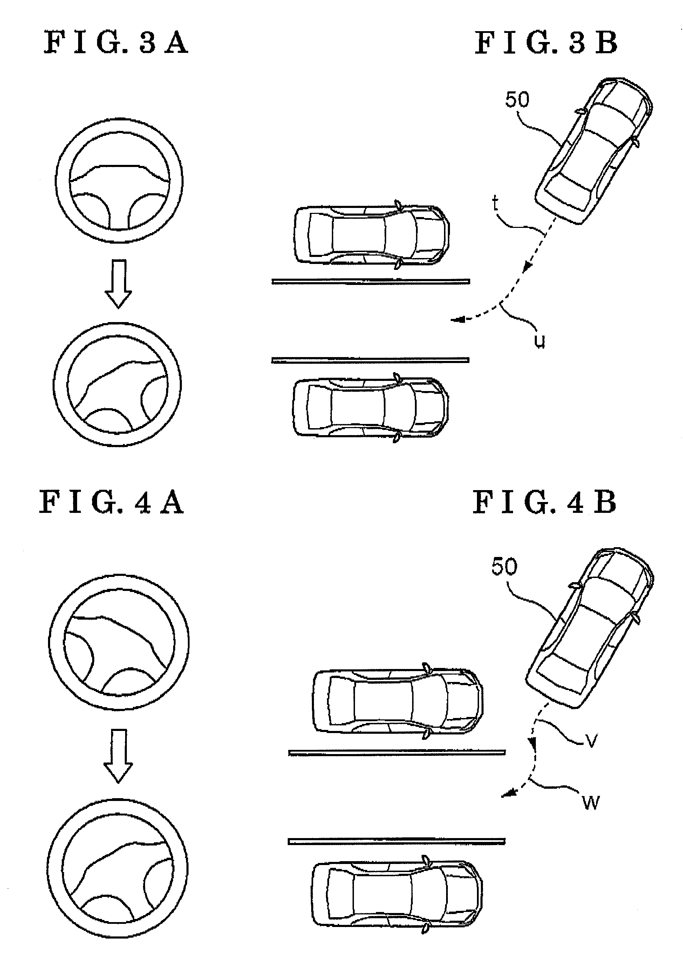

According to the linear model as illustrated in Fig. 3A, the vehicle 50 is driven rearward in a straight line from the preset position and is parked at the target parking position with a predetermined steering angle. For example, Fig. 3A illustrates a state where the vehicle 50 is driven rearward while the steering wheel is maintained in the neutral position and is driven rearward while the steering wheel is being turned in the counterclockwise direction. Thus, a combination of a driving locus t forming a linear shape and a driving locus u forming an arc shape as illustrated by a dashed line in Fig. 3B is obtained for parking the vehicle 50.

According to the double opposite-arc model as illustrated in Fig. 4A, the vehicle is first driven rearward while the steering wheel is being turned in an opposite direction (i.e., a second direction) from a present direction (i.e., a first direction) of the steering wheel relative to the neutral position. Afterwards, the vehicle 50 is driven rearward with the steering wheel turned in the first direction so as to be parked in the target parking. For example, Fig. 4A illustrates a case where the vehicle is driven rearward with the steering wheel turned in the clockwise direction from the neutral state and is then driven rearward with the steering wheel turned in the counterclockwise direction. Thus, a combination of a driving locus v forming an arc shape in the counterclockwise direction and a driving locus w forming an arc shape in the clockwise direction as illustrated by a dashed line in Fig. 4B is obtained for parking the vehicle 50.

The parking path calculating portion 19 calculates the parking path by using one of the aforementioned three models. Which model is used for calculating the parking path depends on the positional relationship between the present position of the vehicle 50 and the target parking position. That is, in a case where the vehicle 50 is presently positioned at a predetermined position relative to the target parking position, the arc model is used for calculating the parking path. In addition, in a case where the vehicle 50 is presently positioned away from the target parking position relative the predetermined position, the linear model is used for calculating the parking path. Further, in a case where the vehicle 50 is presently positioned close to the target parking position relative to the predetermined position, the double opposite-arc model is used for calculating the parking path. At this time, the predetermined position corresponds to a position where the vehicle is parked rearward while the steering angle is maintained constant as illustrated in Figs. 2A and 2B. The present steering angle is transmitted to the parking path calculating portion 19 from the steering sensor 11 as the steering angle information. The path from the present position of the vehicle 50 to the target parking position calculated by the parking path calculating portion 19 is transmitted to the informing portion 21 and the parking assist controlling portion 22.

The informing portion 21 informs the driver of the vehicle 50 that the vehicle 50 can be guided to the target parking position when the path from the own vehicle position to the target parking position is generated. Whether or not the path is generated is identified on the basis of whether or not the path is transmitted from the parking path calculating portion 19. The informing portion 21 informs the driver via an audible output from a speaker provided at the vehicle 50, a display monitor provided at the vehicle 50, an LED (light emitting diode) to which an electric power is supplied, and the like.

In the case where the vehicle 50 can be guided to the target parking position, the parking assist controlling portion 22 performs the parking assistance so as to park the vehicle 50 to the target parking position. The parking assistance may include an automatic steering, an assistance of an operation of the driver by the audible output and/or the display on the display monitor, and the like. The parking assistance is desirably activated via an operation switch pressed by the driver when the driver determines that the target parking position displayed on the display monitor together with the calculated path is appropriate. The parking assistance related to the automatic steering is a known technique and thus an explanation thereof will be omitted. According to the parking assist apparatus 100 of the present embodiment, it is unnecessary for the driver to press the operation switch for starting the calculation of the path to the target parking position. Thus, the driver is not required to confirm whether the target parking position is displayed on the display monitor. The driver can focus on the parking operation accordingly. In addition, an early stage of the parking operation is performed by the driver and thus the driver can change the steering angle of the steering wheel with the vehicle 50 in the stopped state. As a result, the distance from the position where the parking assistance is started to the target parking position is reduced.

Next, how to specify the target parking position depending on the vehicle state according to the parking assistance will be explained with reference to Figs. 5 to 9. Fig. 5A illustrates a positional relationship between the vehicle 50 and a parking space. Fig. 5B illustrates a shift position of the shift lever. Fig. 5C illustrates a state of the steering wheel. Fig. 5D illustrates an image displayed on the display monitor. The driver starts the parking operation when finding the parking space for parking the vehicle 50. In Fig. 5A, in order to park the vehicle 50 in the parking space positioned at the rear left of the vehicle 50, the front portion of the vehicle 50 faces to the right. The shift position of the shift lever at that time is in the D range as illustrated in Fig. 5B because the vehicle 50 moves forward and reaches the position illustrated in Fig. 5A. At that time the steering wheel is turned in the clockwise direction relative to the neutral state as illustrated in Fig. 5C. Accordingly, the wheels 51 provided at the vehicle 50 turn to the right In addition, the screen image displayed on the display monitor at that time is shown in Fig. 5D. For example, a map image of a navigation system, an image of a DVD (digital versatile disc) or a television display, and the like may be displayed on the display monitor. In Fig. 5D, the map image is displayed as an example.

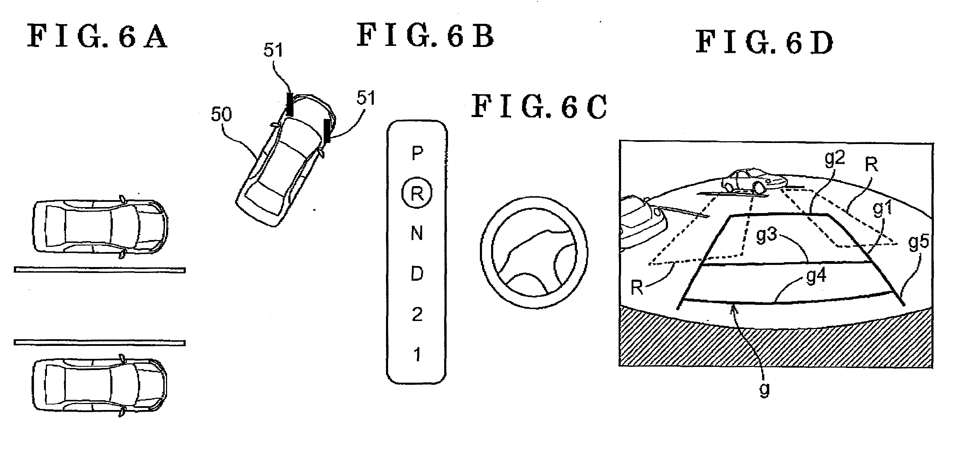

Then, from the state as illustrated in Figs. 5A to 5D, the driver shifts the shift lever to the R range as illustrated in Fig. 6B so as to park the vehicle 50 in the parking space and turns the steering wheel in the counterclockwise direction as illustrated in Fig. 6C. At this time, as illustrated in Fig. 6A, the vehicle 50 has not moved from the position illustrated in Fig. 5A, which results in that the steering wheel is turned while the vehicle 50 is in the stopped state. When the shift lever is changed to the R range, the screen image of the display monitor is changed to the captured image of the rear of the vehicle 50 as illustrated in Fig. 6D.

A rear estimation line g is indicated on the aforementioned captured image in a superimposed manner as illustrated in Fig. 6D. The rear estimation line g is an index indicating an estimation locus of a rear edge of the vehicle 50 depending on the steering angle of the vehicle 50 that is driven rearward. According to the present embodiment, the rear estimation line g includes a rear edge estimation locus line g1 indicating an estimated locus of the rear edge of the vehicle 50 and distance indicator lines g2, g3 and g4 in the rear of the vehicle 50. Specifically, the distance indicator lines g2, g3, and g4 correspond to a 5m-indicator line, a 3m-indicator line, and a 1 m-caution line, respectively. The rear estimation line g is basically illustrated in yellow. However, the 1m-caution line g4 and a most rear edge estimation locus line g5 arranged closer to the vehicle 50 relative to the 1 m-causion line g4 are illustrated in red so as to draw the attention of the driver.

In the state illustrated in Figs. 6A to 6D, it is determined that a predetermined condition (i.e., the shift lever is shifted to the R range and the steering displacement of the steering wheel is greater than 90 degrees) is satisfied by the trigger establishment determining portion 16. Thus, the image recognition of the feature related to the identification of the parking space is started. As a result, left and right focus areas R are also superimposed on the captured image. The focus areas R are areas where the target parking position setting portion 17 intends a recognition of the feature on the captured image and are basically illustrated in orange. The target parking position setting portion 17 specifies the parking space identified by the feature as the target parking position in a case where the feature is recognized within each of the focus areas R via the image recognition.

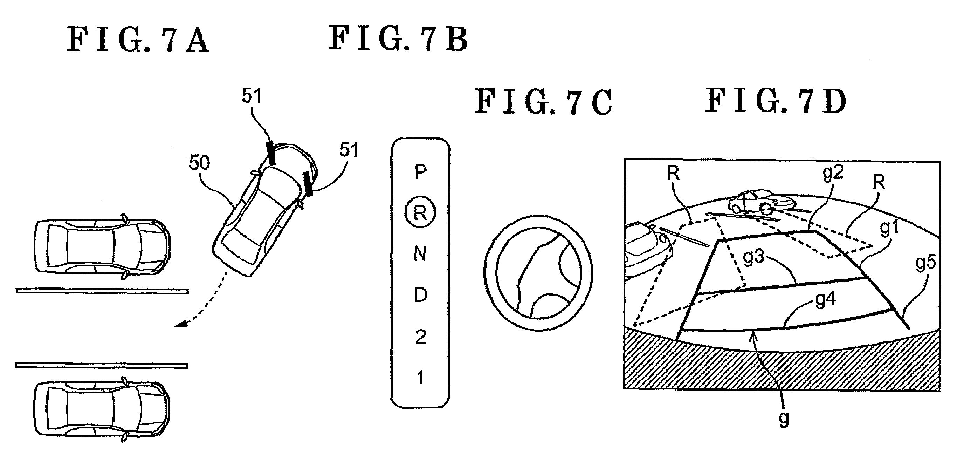

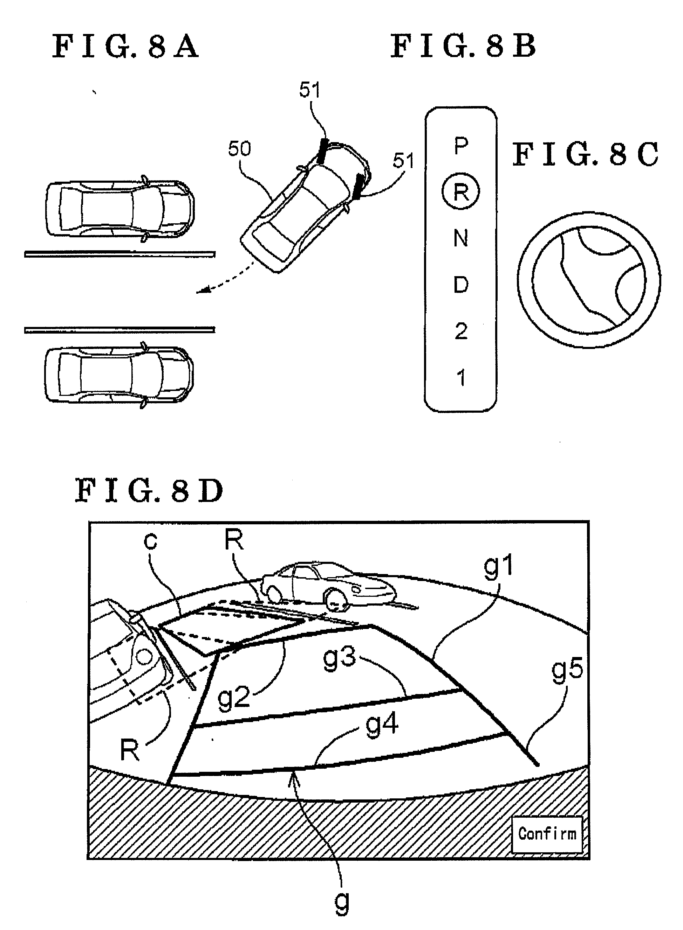

In a state illustrated in Figs. 7A to 7D, the target parking position setting portion 17 has not yet specified the target parking position. Thus, the parking operation of the vehicle 50 is performed by the driver. In a case where the target parking position setting portion 17 specifies the target parking position while the driver is performing the parking operation, a parking frame c is superimposed on the captured image as illustrated in Fig. 8D. The parking frame c is generally illustrated in green. The color of each of the focus areas R is desirably changed to blue at a time when the target parking position is specified. When the target parking position is specified in the aforementioned manner, the parking path calculating portion 19 calculates the path from the present position of the vehicle 50 to the target parking position. When the parking path is calculated, words "Confirm" is indicated at the bottom right of the display monitor. The driver touches the words "Confirm" to thereby automatically perform the parking operation.

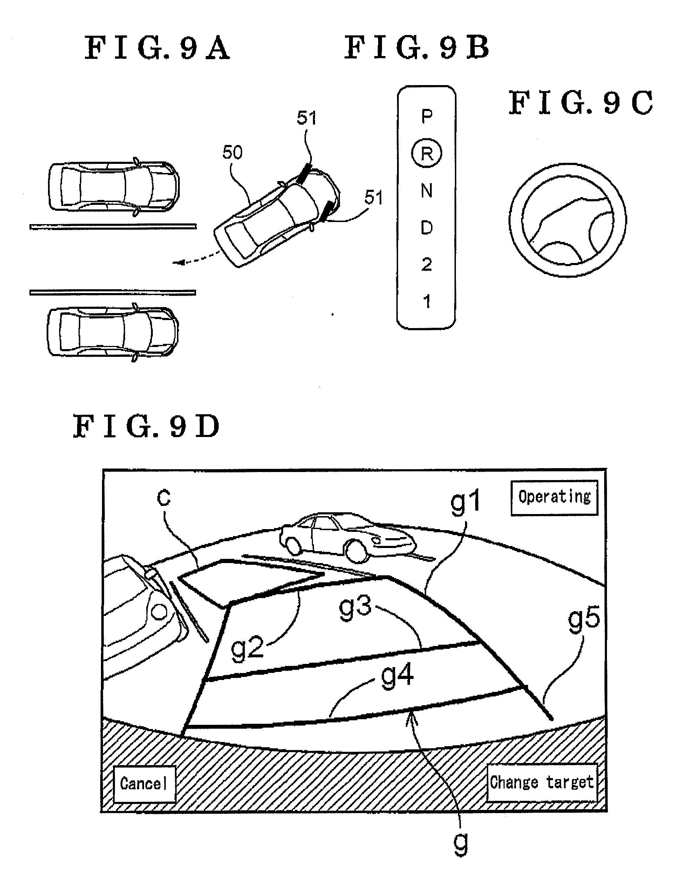

In a case where the driver touches the words "Confirm" in Fig. 8D, the automatic steering to park the vehicle 50 in the target parking position is started as illustrated in Figs. 9A to 9D. When the automatic steering is started, the driver can release one's hand from the steering wheel and is not required to depress an acceleration pedal, In such state, as illustrated in Fig. 9D, words "Operating" is indicated at the top right of the display monitor. The driver checks the surroundings of the vehicle 50 and, upon possibility of abnormality, depresses a brake pedal or touches words "Cancel" indicated at the bottom left of the display monitor so as to stop the automatic operation. When it is required to change the target parking position, words "Change target" is indicated at the bottom right of the display monitor so that the change of the target parking position is achievable. The driver touches the words "Change target" as necessary to thereby change the target parking position.

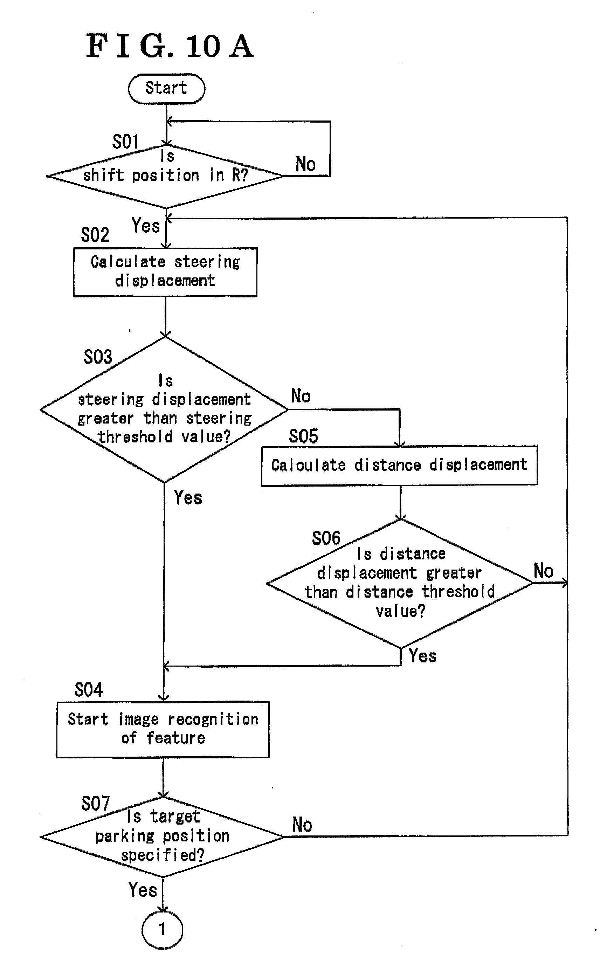

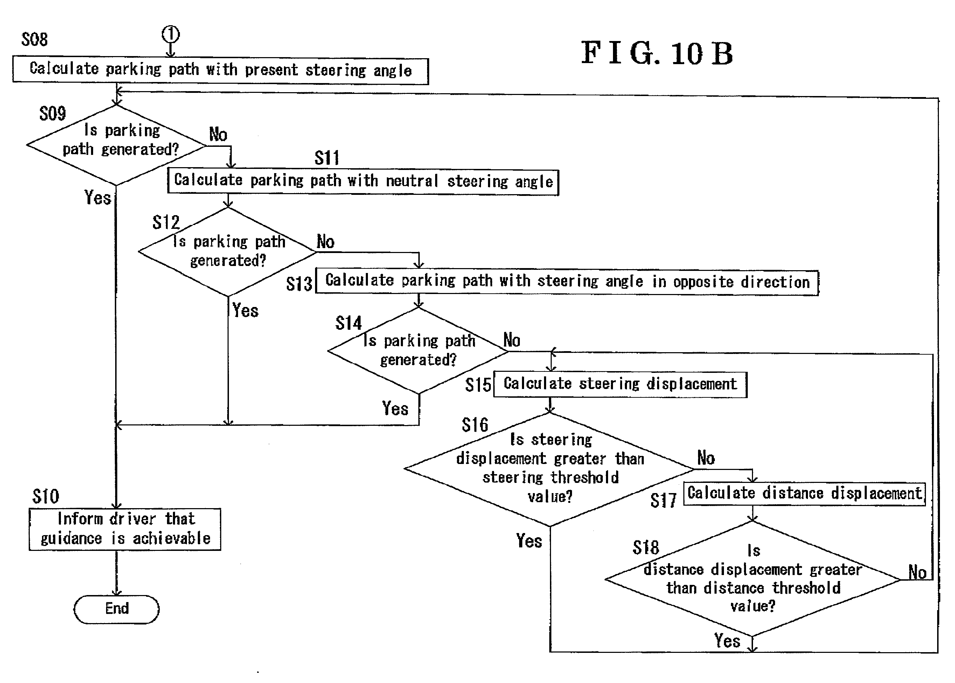

Next, the decision of the target parking position and the calculation of the parking path according to the parking assist apparatus 100 of the present embodiment will be explained by flowcharts shown in Figs. 10A and 10B. When it is determined that the shift position of the shift lever is changed to the reverse range (R) in S01, the steering displacement calculating portion 14 calculates the steering displacement of the steering wheel in S02. The steering displacement is a difference between the steering angles before and after the driver turns the steering wheel while the vehicle is in the stopped state so as to park the vehicle 50 in the target parking position. The calculated steering displacement is transmitted to the trigger establishment determining portion 16. When the trigger establishment determining portion 16 determines that the steering displacement is greater than the steering threshold value (for example, 90 degrees) specified beforehand in S03, the target parking position setting portion 17 starts the image recognition of the feature related to the identification of the parking space in S04.

On the other hand, in a case where the trigger establishment determining portion 16 determines that the steering displacement is equal to or smaller than the steering threshold value in S03, the distance displacement calculating portion 15 calculates the distance displacement in S05. The distance displacement may be calculated each time after the steering displacement is calculated in S02. When the distance displacement is calculated, the trigger establishment determining portion 16 determines whether or not the calculated distance displacement is greater than the distance threshold value (for example, 1m).

When it is determined that the distance displacement is greater than the distance threshold value in S06, the target parking position setting portion 17 starts the image recognition of the feature related to the identification of the parking space in S04. On the other hand, when it is determined that the distance displacement is equal to or smaller than the distance threshold value in S06, the process is returned to S02 and a routine is repeated.

In S04, the target parking position setting portion 17 starts the image recognition. At this time, in a case where the target parking position cannot be specified by using a result of the image recognition in S07, the process is returned to S02 and the routine is repeated. On the other hand, when the target parking position is specified by the target parking position setting portion 17 in S07, the parking path calculating portion 19 calculates the parking path from the present position to the target parking position based on the present steering angle in S08.

The parking path calculating portion 19 first generates the parking path by applying the arc model. When it is determined that the parking path is generated by the arc model in S09, the driver is informed that the vehicle 50 can be guided to the target parking position by the parking assistance performed by the parking assist controlling portion 22 in S10. In a case where the parking path calculating portion 19 cannot generate the parking path by the arc model in S09, the parking path calculating portion 19 calculates the parking path by applying the linear model with the neutral steering angle in S11.

When it is determined that the parking path is generated by the linear model in S12, the driver is informed that the vehicle 50 can be guided to the target parking position by the parking assistance performed by the parking assist controlling portion 22 in S10. In a case where the parking path calculating portion 19 cannot generate the parking path by the linear model in S12, the parking path calculating portion 19 calculates the parking path by applying the double opposite-arc model with the steering angle in the reverse direction in S13.

When it is determined that the parking path is generated by the double opposite-arc model in S14, the driver is informed that the vehicle 50 can be guided to the target parking position by the parking assistance performed by the parking assist controlling portion 22 in S10. In a case where the parking path calculating portion 19 cannot generate the parking path by the double opposite-arc model in S14, the steering displacement calculating portion 14 again calculates the steering displacement in S15.

The trigger establishment determining portion 16 again determines whether or not the newly calculated steering displacement is greater than the steering threshold value in S16. When the steering displacement is greater than the steering threshold value, the process is returned to S08 and the routine is repeated. On the other hand, when the calculated steering displacement is equal to or smaller than the steering threshold value, the distance displacement calculating portion 15 again calculates the distance displacement in S17.

The trigger establishment determining portion 16 again determines whether or not the newly calculated distance displacement is greater than the distance threshold value in S18. When the distance displacement is greater than the distance threshold value, the process is returned to S08 and the routine is repeated. On the other hand, when the distance displacement is equal to or smaller than the distance threshold value, the process is returned to S15 and the routine is repeated.

The parking assist apparatus 100 specifies the target parking position and calculates the parking path to the target parking position according to the aforementioned process. In S10, when the driver is informed that the vehicle 50 can be guided to the target parking position by the parking assist apparatus 100 in S10, the driver may press or touch the operation switch so that the audible guidance for the operation in connection with the parking operation is conducted or the vehicle 50 is guided to the target parking position by the automatic steering or driving.

According to the aforementioned embodiment, in a case where the change of the target parking position specified by the target parking position setting portion 17 is necessary, the driver touches or presses the words "Change target" indicated at the bottom right of the display monitor to thereby change the target parking position. The change of the target parking position, however, is not limited to the aforementioned manner. For example, the target parking position setting portion 17 may change the target parking position depending on the steering operation by the driver after the target parking position is once specified. For example, in a case where the driver performs the steering operation with an intention to park the vehicle 50 in the other parking space while the parking assistance is being performed by the parking assist apparatus 100 after the target parking position is specified, the target parking position setting portion 17 can change the target parking position from that once specified to the other new parking position. Accordingly, in a case where the driver cannot approve the target parking position specified by the target parking position setting portion 17 among multiple parking spaces around the vehicle 50, for example, the target parking position is smoothly changed without the operation by the driver to touch or press the words "Change target".

In addition, according to the aforementioned embodiment, the target parking position setting portion 17 identifies the single parking space by the image recognition. Alternatively, the target parking position setting portion 17 may identify the multiple parking spaces by the image recognition. In such case, the target parking position setting portion 17 may specify an area, i.e., the focus area R, where the image recognition of the feature is conducted on the captured image depending on the steering operation. That is, in a case where the multiple parking spaces are present around the vehicle 50, for example, the focus area R is specified depending on the steering operation, thereby easily performing the image recognition of the feature related to the identification of the target parking position.

Further, according to the aforementioned embodiment, each of the steering sensor 11 and the wheel speed sensor 13 is constituted by the Hall element. Alternatively, each of the steering sensor 11 and the wheel speed sensor 13 may be constituted by the other known technique.

Furthermore, according to the aforementioned embodiment, the shift position sensor 12 detects the shift position of the shift lever via the output voltage that varies depending on the shift position. Alternatively, the shift position may be detected by the other known technique.

Furthermore, according to the aforementioned embodiment, the image capturing portion 18 is constituted by the CCD camera, or the like. Alternatively, the image capturing portion 18 may be constituted by the other image capturing device. In addition, the image capturing portion 18 may be a side-view camera, or the like instead of a rearview camera.

Furthermore, according to the aforementioned embodiment, the target parking position setting portion 17 performs the image recognition. Then, the target parking position is specified on the basis of the detection result of the image recognition. Alternatively, the target parking position may be specified by the other method beforehand without the image recognition. For example, the driver may specify a parking space displayed on the display monitor as a desired target parking position or may specify the target parking position by stopping the vehicle in front of a parking space which is desired as the target parking position.

Furthermore, according to the aforementioned embodiment, the target parking position is specified by the image recognition of the captured image by the image capturing portion 18. Alternatively, the parking space may be detected by an ultrasonic wave sonar, for example, and the detected parking space may be specified as the target parking position. In addition, the vehicle 50 may be temporarily stopped at a position away from a desired parking space of the driver by a predetermined distance by a driving operation of the driver, and the aforementioned parking space having a predetermined relationship with the position where the vehicle is temporarily stopped is specified as the target parking position. Further, the target parking position may be specified by the other known method.

Furthermore, according to the aforementioned embodiment, the parking path calculating portion 19 calculates the path from the present position to the target parking position. This calculation may be performed after the target parking position is specified by the target parking position setting portion 17. In such case, when the target parking position once specified by the target parking position setting portion 17 is changed by the operation of the driver, for example, the parking path calculating portion 19 may desirably newly calculate the parking path. Alternatively, the parking path calculating portion 19 may calculate the parking paths to all the parking spaces identified by the target parking position setting portion 17 by the image recognition. In such case, the parking path calculating portion 19 temporarily stores the calculated paths. In a case where the target parking position specified by the target parking position setting portion 17 is changed by the operation of the driver, for example, the parking paths stored by the parking path calculating portion 19 may be appropriately read out for use.

Furthermore, according to the aforementioned embodiment, the trigger establishment determining portion 16 determines that the parking operation is started when the shift lever is in the reverse range and the steering displacement of the steering angle obtained after the start of rearward movement of the vehicle 50 reaches the steering threshold value specified beforehand, which is 90 degrees. In addition, the trigger establishment determining portion 16 may also determine that the parking operation is started when the shift lever is in the reverse range and the steering displacement specified on the basis of the steering angle of the steering wheel immediately before the shift lever is shifted to the reverse range and the steering angle of the steering wheel immediately after the start of the rearward movement of the vehicle 50 is greater than the steering threshold value specified beforehand, which is 90 degrees. In this case, the aforementioned 90 degrees is only the example and the threshold value may be defined to be the other angle, In addition, the aforementioned steering threshold values may be defined differently from each other.

Furthermore, according to the parking assist apparatus 100 of the aforementioned embodiment, the parking path calculating portion 19 starts the calculation of the path from the own vehicle position of the vehicle 50 to the target parking position in a case where the trigger establishment determining portion 16 determines that the parking operation is started. In addition, the informing portion 21 informs the driver that the vehicle 50 can be guided to the target parking position in a case where the path from the own vehicle position to the target parking position is generated. The embodiment is not limited to have the aforementioned structure and may be modified appropriately.

The parking assist apparatus 100 of the present embodiment may include the trigger establishment determining portion 16 determining whether or not the driver starts the parking operation based on the shift position of the shift lever provided at the vehicle 50 and the steering displacement of the steering wheel provided at the vehicle 50, the image capturing portion 18 capturing an image of surroundings of the vehicle 50, the target parking position setting portion 17 starting the image recognition of the feature related to the identification of the target parking position where the vehicle 50 is parked on the captured image of the surroundings of the vehicle 50 based on the shift position and the steering displacement, and the informing portion 21 informing the driver that the target parking position is specified.

According to the aforementioned structure, the parking assistance by the parking assist apparatus 100 is achievable as an extension of a normal parking operation. Thus, the driver is not required to operate an operation switch, and the like. In addition, an early stage of the operation related to the parking operation is performed by the driver and the driver is surely informed that the vehicle 50 can be guided to the target parking position each time the target parking position is specified, The driver therefore appropriately starts the process related to the parking assist.

In addition, the parking assist apparatus 100 includes the trigger establishment determining portion 16 determining whether or not the parking operation is started by a driver for the vehicle 50 based on the shift position of the shift lever provided at the vehicle 50 and the steering displacement of the steering wheel provided at the vehicle 50, the image capturing portion 18 capturing an image of surroundings of the vehicle 50, the target parking position setting portion 17 starting the image recognition of the feature related to the identification of the target parking position in which the vehicle 50 is parked in the captured image of surroundings of the vehicle 50 by the image capturing portion 18 based on the shift position and the steering displacement, the target parking position setting portion 17 specifying the target parking position, and the informing portion 21 informing the driver that the target parking position is specified.

According to the aforementioned embodiment, the parking assistance by the parking assist apparatus 100 is achievable as an extension of a normal parking operation. Thus, the driver is not required to operate an operation switch, and the like. In addition, the early stage of the operation related to the parking operation is performed by the driver so as to start the calculation related to the parking assistance. Then, in a case where the target parking position is specified, the driver is informed thereof. That is, the driver is informed that it is achievable for the vehicle 50 to be guided to the target parking position by the parking assist apparatus 100. The driver appropriately starts the parking assistance by the parking assist apparatus 100.

In addition, the trigger establishment determining portion 16 determines that the parking operation is started in a case where the shift lever is in the reverse range and the steering displacement of the steering wheel steered after the vehicle 50 starts a rearward driving reaches the steering threshold value specified beforehand.

Accordingly, it is appropriately detectable whether or not the driver starts the parking operation.

Further, the trigger establishment determining portion 16 determines that the parking operation is started in a case where the shift lever is in the reverse range and the steering displacement of the steering wheel defined by a steering angle of the steering wheel immediately before the shift lever is shifted to the reverse range and a steering angle of the steering wheel immediately after the vehicle 50 starts a rearward driving is greater than the steering threshold value specified beforehand.

Accordingly, even when the driver turns the steering wheel with the vehicle 50 in the stopped position upon parking the vehicle 50, it is appropriately detectable whether or not the driver starts the parking operation.
A parking assist apparatus includes a target parking position setting portion (17) specifying a target parking position, a trigger establishment determining portion (16) determining whether or not a parking operation is started by a driver for a vehicle (50) based on a shift position of a shift lever and a steering displacement of a steering wheel, a parking path calculating portion (19) starting a calculation of a path from an own vehicle position to the target parking position in a case where the trigger establishment determining portion (16) determines that the parking operation is started by the driver, and an informing portion (21) informing the driver that it is achievable for the vehicle (50) to be guided to the target parking position in a case where the path from the own vehicle position to the target parking position is generated by the parking path calculating portion.

## Claims

1. A parking assist apparatus (100) comprising:
a target parking position setting portion (17) specifying a target parking position in which a vehicle (50) is parked;
a trigger establishment determining portion (16) determining whether or not a parking operation is started by a driver for the vehicle (50) based on a shift position of a shift lever provided at the vehicle and a steering displacement of a steering wheel provided at the vehicle;
a parking path calculating portion (19) starting a calculation of a path from an own vehicle position of the vehicle (50) to the target parking position in a case where the trigger establishment determining portion (16) determines that the parking operation is started by the driver; and
an informing portion (21) informing the driver that it is achievable for the vehicle (50) to be guided to the target parking position in a case where the path from the own vehicle position to the target parking position is generated by the parking path calculating portion (19).

2. The parking assist apparatus (100) according to claim 1, wherein the trigger establishment determining portion (16) determines that the parking operation is started in a case where the shift lever is in a reverse range and the steering displacement of the steering wheel steered after the vehicle (50) starts a rearward driving reaches a steering threshold value specified beforehand.

3. The parking assist apparatus (100) according to claim 1, wherein the trigger establishment determining portion (16) determines that the parking operation is started in a case where the shift lever is in a reverse range and the steering displacement of the steering wheel defined by a steering angle of the steering wheel immediately before the shift lever is shifted to the reverse range and a steering angle of the steering wheel immediately after the vehicle starts a rearward driving is greater than a steering threshold value specified beforehand.

4. The parking assist apparatus according to any one of claims 1 through 3, further comprising,
an image capturing portion (18) capturing an image of surroundings of the vehicle (50), wherein the target parking position setting portion (17) starts an image recognition of a feature related to an identification of the target parking position in a captured image of surroundings of the vehicle (50) by the image capturing portion (18) based on the shift position and the steering displacement.

5. The parking assist apparatus (100) according to claim 4, wherein the target parking position setting portion (17) specifies an area (R) where the image recognition of the feature is performed on the captured image in response to an operation of the steering wheel.

6. The parking assist apparatus (100) according to any one of claims 1 through 5, wherein the target parking position setting portion (17) changes the target parking position in response to an operation of the steering wheel by the driver after the target parking position is specified.
